(19)

**Europäisches Patentamt**
**European Patent Office**
**Office européen des brevets**

(11)   **EP 4 313 846 B1**

(12)                     **EUROPEAN PATENT SPECIFICATION**

(45) Date of publication and mention
of the grant of the patent:
**18.03.2026   Bulletin 2026/12**

(21) Application number: **22816574.2**

(22) Date of filing: **26.05.2022**

(51) International Patent Classification (IPC):
**B82Y 30/00** *(2011.01)*

(52) Cooperative Patent Classification (CPC):
**C09D 1/00; C09D 5/00;** B82Y 30/00

(86) International application number:
**PCT/TR2022/050489**

(87) International publication number:
**WO 2022/255976 (08.12.2022 Gazette 2022/49)**

(54) **METHOD OF OBTAINING MEMBRANES AND OTHER FUNCTIONAL FILMS BY ALIGNED DEPOSITION OF NANOROD STRUCTURED MATERIALS ON POROUS SURFACES VIA CROSS FLOW**

VERFAHREN ZUR HERSTELLUNG VON MEMBRANEN UND ANDEREN FUNKTIONELLEN FILMEN DURCH AUSGERICHTETE ABSCHEIDUNG VON NANOSTÄBCHENSTRUKTURMATERIALIEN AUF PORÖSEN OBERFLÄCHEN DURCH QUERSTRÖMUNG

PROCÉDÉ D'OBTENTION DE MEMBRANES ET D'AUTRES FILMS FONCTIONNELS PAR DÉPÔT ALIGNÉ DE MATÉRIAUX STRUCTURÉS EN NANOTIGES SUR DES SURFACES POREUSES PAR ÉCOULEMENT TRANSVERSAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:   **31.05.2021   TR 202108914**

(43) Date of publication of application:
**07.02.2024   Bulletin 2024/06**

(73) Proprietor: **ORTA DOGU TEKNIK UNIVERSITESI**
**06800 Ankara (TR)**

(72) Inventors:
• **ÇULFAZ EMECEN, Pinar Zeynep**
  **Ankara (TR)**
• **BÜKÜSOGLU, Emre**
  **Etimesgut/ Ankara (TR)**
• **KOCAMAN, Ceren**
  **Çukurambar  Ankara (TR)**
• **IÇTEN, Berk Can**
  **Ankara (TR)**

(74) Representative: **Yalçiner Patent and Consulting Ltd.**
**Tunus Caddesi 85/3-4**
**Kavaklidere**
**06680 Ankara (TR)**

(56) References cited:
**WO-A1-2014/071528          WO-A1-2020/128139**
**CA-A1- 2 898 513             CN-A- 106 519 308**
**CN-A- 111 252 768           US-A1- 2012 234 887**
**US-A1- 2012 312 687         US-A1- 2018 043 312**

## Description

## Field of the Invention

The invention relates to obtaining membranes and other functional films (films having anisotropic optical characteristics for applications such as decoration, camouflage, light filtering, three-dimensional barcode, and label, coatings having defined surface roughness for super-hydrophilic or super-hydrophobic surface coatings, material coatings having aligned conductivity) by aligned deposition of nanorod structured materials on porous surfaces via cross (tangential) flow.

## State of the Art (Prior Art)

Commercial examples of porous structures such as membranes and adsorbents have a wide pore size distribution. Adjusting the pore size as desired needs to be done empirically and iteratively within the framework of fundamental principles governing the pore formation process. For example, the pore size of the membranes obtained in the phase inversion method, which is the most common method used in the production of polymeric membranes, can be adjusted by changing the composition of polymer solution and coagulation medium conditions. However, only the direction in which changes in these conditions can affect the pore size can typically be predicted in advance, and in some cases, even this cannot be predicted precisely (Yücel et al., 2018, Journal of Membrane Science, 559, 54-62; Durmaz et al., 2018, Journal of Membrane Science, 178, 93-103, Guillen et al., 2011, Industrial and Engineering Chemistry Research, 50(7), 3798-3817). The main reason for this is that generally a production parameter has more than one effect, therefore the result of a change made in just a single parameter is not easily predictable. Adjusting the pore size by adjusting simple operating parameters (flow rate, concentration, pH, temperature, etc.) based on a theoretical background will provide flexibility and convenience to product design. A narrow pore size distribution will provide high selectivity for both products, thus increasing the efficiency of various separation operations (e.g. the processes for the separation of materials of similar size such as different proteins, sugars, drugs, etc. from each other) and enabling more selective separations with less material consumption.

In the state of the art, membranes and adsorbents with narrow and controllable pore size distribution can be obtained by using special methods and/or materials (Yu et al., 2014, Angewandte Chemie - International Edition, 53(38), 10072-10076.). However, these often require materials and/or processes that are expensive and not easily synthesized.

Patent document numbered CN102703092A is related to a nanocellulose liquid crystal film and the application thereof, particularly cellulose nanocrystalline cholesteric liquid crystal material that belongs to the field of macromolecules and nanomaterials and the preparation method thereof. Here nanocellulose liquid crystal films are obtained by attaching cellulose nanocrystals to the surface of support materials.

Patent document numbered US 2019/0136033 A1 is related to obtaining polymeric nanofibers through liquid crystallinity on the substrate under pressure.

US20120312687A1 discloses method for preparing functionalized conductive membrane, comprises electrochemically depositing metal layer on surface of conductive membrane to form metallized conductive membrane and contacting membrane with first solution.

CN106519308 describes the preparation of a membrane or film from crosslinked cellulose. Within the cellulose structure, cellulose nanocrystals are present. The method of forming films involves dissolving the cellulose source, with crosslinking also performed in solution.

CA2898513A1 discloses a method for producing nanocrystalline products by combining one or more nanocrystalline materials, such as nanocrystalline cellulose, nanocrystalline polymers, nanocrystalline plastics, or other nanocrystals of cellulose composites or structures, with at least one substrate, component, or additive to form a nanocrystalline composition. The nanocrystalline composition is then processed to create a nanocrystalline product, which can further be modified with different materials, such as metals, to produce reinforced materials.

WO2014071528 A1 discloses a nanocomposite phase-change material (PCM) comprises at least one phase-change polymer and a nanocrystalline filler having a high aspect ratio, where the phase-change polymer and the nanocrystalline filler interact together non-covalently. The phase-change polymer undergoes a solid-solid phase transition or an endothermic phase transition at a desired transition temperature.

US2018043312 A1 discloses a reverse osmosis composite film which comprises a reverse osmosis membrane made of a crosslinked polyamide and carbon nanotubes provided on a porous support component. The carbon nanotubes are disentangled within the crosslinked polyamide. The distribution of the closest distances between the carbon nanotubes in the reverse osmosis membrane has a peak within the range of the membrane's thickness, and the half-width of the peak is equal to or less than the membrane's thickness.

However, in the state of the art, forming films with well-defined, controllable and designable structures by controlling the liquid crystal alignment of the nanorods during deposition on the porous surface and changing the pore size by simply adjusting the operating parameters (flow rate, concentration, pH, temperature, etc.) is not the case.

## Brief Description and Objects of the Invention

The present invention is related to a method for obtaining membrane and other functional films by aligned deposition of nanorod structured (high aspect ratio) materials on porous surfaces via cross flow that meets the requirements above-mentioned, resolves all of the disadvantages and provides some additional advantages.

The primary object of the invention is to obtain films with well-defined, controllable and designable structures by controlling the liquid crystal alignment of the nanorods during deposition on the porous surface.

The object of the invention is to adjust the pore size of the films by adjusting only flow conditions, concentration, pH, temperature, etc. accordingly by controlling the liquid crystal alignment of the nanorods during deposition on the porous surface.

The nanorod materials used in the invention can be inexpensive materials such as cellulose nanocrystals, which can be obtained from cellulose, a natural and common polymer, in concentrated acid media. However, nanorod materials are not limited to cellulose nanocrystals.

It has been shown that the alignment can be increased by depositing cellulose nanocrystals on the surface at different flow rates. The distance between the nanorods can also be adjusted by the deposition conditions and a narrow pore size distribution can be obtained with nanorods having narrow size distribution.

In addition, the invention allows membrane production by using only water instead of organic solvents as a solvent in suspensions. Removing organic solvents that are relatively expensive and often have negative impacts on health and the environment from the production process is advantageous both in terms of cost and environmental impact.

With the invention, for the first time, aligned and porous films are obtained by using the liquid crystal alignment of nanorods with filtration carried out on the porous surface. The filtration parameters (flow rate and pressure) offer two new parameters for controlling the structure of the films, thereby enabling the controlled design of film structures consisting of aligned nanorods and pores.

The methods provided in the invention are fully scalable. The advantage of this is that the deposition is carried out in a controlled manner in large areas up to square meter scales. The advantage provided by this is that wider areas of use can be reached and commercialization is easier.

In addition to deposition on porous surfaces in the form of flat films, the method can also be used for deposition on porous surfaces such as patterned surfaces, and tubular, hollow fibers.

The synthesis of membranes and adsorbents with controllable and narrowly distributed pore sizes is achieved by using nanorods in the method and controlling their transition to the nematic liquid crystalline phase by flow conditions and suspension characteristics. The narrow pore size distribution increases the selectivity and improves the efficiency of the separation process, thus reducing the cost.

The surface deposition methods used in the invention are easily scalable. The advantage provided by this is that wider areas of use can be reached and commercialization is easier.

## Description of the Figures of the Invention

The figures and related descriptions necessary for the subject matter of the invention to be understood better are given below.

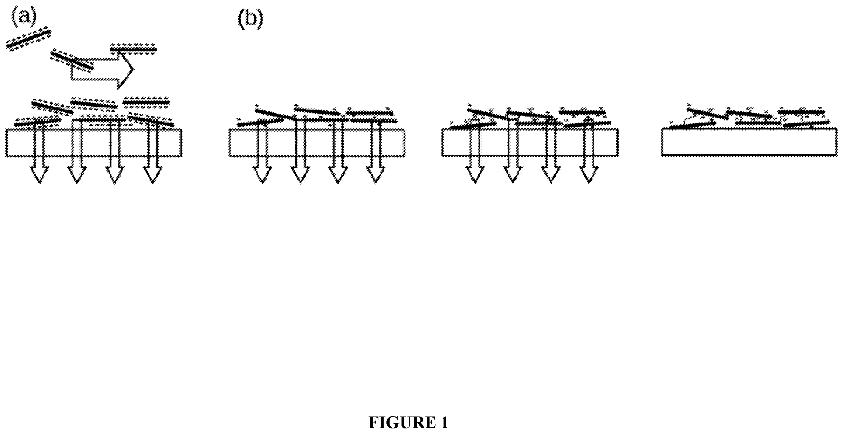

**Figure 1:** Methods for aligned deposition of nanorods on the surface (a) and surface fixation by disrupting their colloidal stability (b)

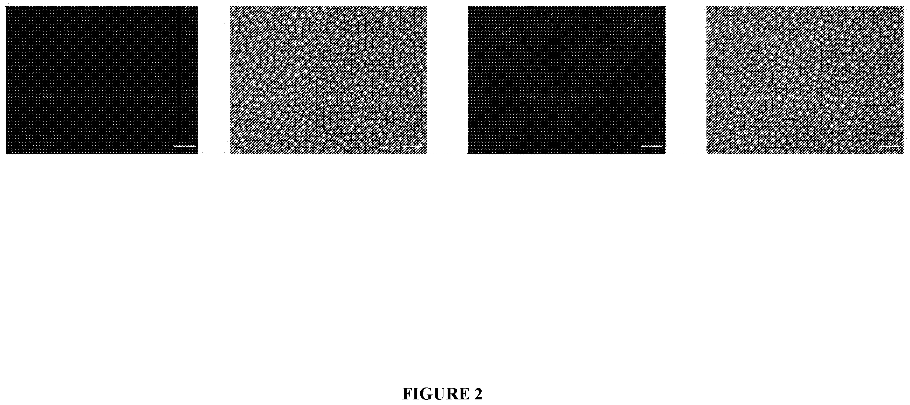

**Figure 2:** Polarized microscope images of cellulose nanocrystal films obtained on porous support at 40 $s^{-1}$ shear rate. The polarized filters are at 90 degrees to each other and the flow direction of the cellulose nanocrystal suspension is at 0, 45, 90 and 135 degrees from left to right with respect to the polarized filter direction, respectively. In the 1st and 3rd row images, since the alignment of the cellulose nanocrystals is in the same direction as the analyzer or polarizer, it does not cause a change in the polarization of the passing light, thereby resulting in a black microscope image.

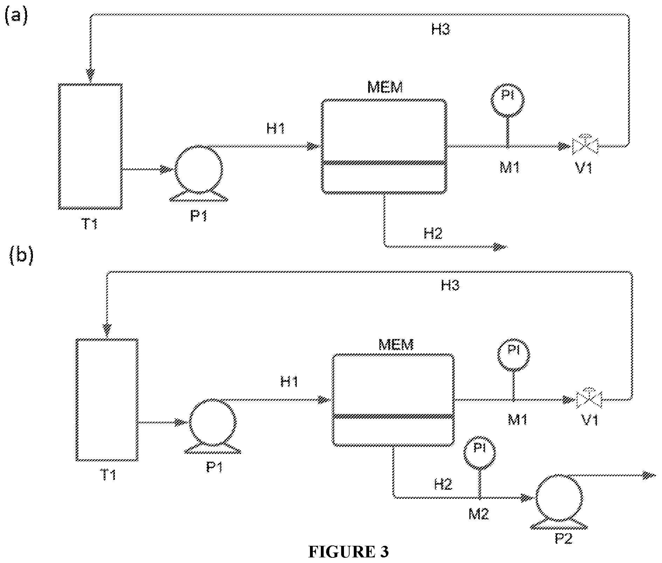

**Figure 3:** Assemblies for the deposition of cellulose nanocrystals on porous surfaces. T1: Cellulose nanocrystal suspension, P1: Feed pump, MEM: Filtration module designed to separate the feed (H1) and retentate (H3) and permeate or filtrate (H2) streams of the porous surface, M1: Pressure gauge, V1: Pressure control valve, M2: Pressure gauge, P2: Suction pump suitable for creating negative pressure in H2 line

## Detailed Description of the Invention

In this detailed description, obtaining membrane and other functional films by aligned deposition of nanorod structured materials on porous surfaces via cross flow is described only for a better understanding of the subject matter and without any limiting effect.

The method for obtaining a membrane or a functional film of the invention comprises the process steps of;

a) Obtaining aligned nanorod layers by filtering the nanorod structured material suspensions on a porous surface by creating a pressure difference between two sides of the porous surface and under a cross (tangential) flow,

b) Stabilizing the aligned nanorod layers by disrupting their colloidal stability via change in ionic strength, pH, temperature, pressure or solvent exchange or by cross-linking in case the nanorods have functional groups on their surfaces and thereby obtaining stable films

After step b, optionally the deposit turned into a stable film can be obtained in a free-standing manner by dissolving the porous support material in a solvent that is capable of dissolving it.

Nanorod structured material can be metal, organic or inorganic, synthetic or natural rod-shaped materials such as cellulose nanocrystal, metal hydroxide nanorod, and nanotube.

Suspensions of metal, organic or inorganic, synthetic or natural nanorod materials such as cellulose nanocrystals, metal hydroxide nanorods, and nanotubes in various solvents can show nematic liquid crystal alignment under flow. Factors such as flow rate, concentration of nanorods and ionic strength can be used to control the degree of alignment and the distance between the long axes of aligned nanorods. The transition from random arrangement to alignment in the flow direction depends on the characteristics of the material such as aspect ratio, density, etc., and will occur at different values for each nanorod. For example, for cellulose nanocrystals with a length of 180 nm and a diameter of 8 nm, there is an alignment on flow rates that provide a shear rate of 10 s$^{-1}$. The concentration of the transition from the isotropic phase to the aligned nematic phase can also be found with the Onsager Model depending on the aspect ratio and density of the nanorods (Qiao et al., 2016, Food Hydrocolloids, 55, 19-25).

$$C^* = \frac{\pi \cdot \rho \cdot d^2}{4 \cdot L^2}$$

The distance between the long axes of the aligned nanorods can be controlled by changing the ionic strength from zero to a concentration that causes the nanorods to aggregate and collapse for any given salt. For example, this concentration range is approximately 0 - 200 mM for cellulose nanocrystals and NaCl and approximately 0 - 25 mM for CaCl$_2$.

The first step of the invention is to deposit nanorods aligned in the direction of the flow on a porous support surface in a controlled manner by depositing them on the surface due to the pressure difference created between the two sides of the porous surface while flowing tangentially to the porous surface under flow conditions that will cause nanorod alignment (Figure 1.a). The porous surface must have a pore size that does not allow the nanorods to penetrate therein. The pressure difference between the two sides of the surface can be provided by a valve placed at the outlet of the line through which the nanorod suspension flows tangential to the surface (Nataraj et al., 2008, Journal of Membrane Science, 308 (1-2), 152-161; Konca et al., 2019, Journal of Membrane Science, 587/9) (Figure 3.a)

The other side of the porous surface can be at atmospheric pressure or below atmospheric pressure, provided that it is at a lower pressure than the feed side. The fact that this side is below atmospheric pressure can be realized with a pump that provides suction to this line, thus allowing the solvent in the nanorod suspension to pass through the porous surface into this line (Miller et al., 2013, Review of Scientific Instruments, 84/3, 035003; Gengal et al., 2015, Journal of Membrane Science, 476, 224-233) (Figure 3.b). In this case, the other side of the surface containing the nanorods under cross flow can be at or above atmospheric pressure.

During this filtration operation, the concentration of nanorods on the surface is higher than that of the original suspension because the solvent, which is the continuous phase of the suspension, can pass through the pores while the nanorods are too large to pass through the porous surface. This is the same phenomenon referred to as "concentration polarization" in tangential flow membrane filtration. When the pressure difference between the two sides of the porous support surface is gradually increased under constant flow conditions, it is seen that the flow rate through the unit membrane area does not change after a certain pressure. This is known as "limiting flux" in tangential flow membrane filtration. After the limiting flux is reached, increasing the pressure does not change the concentration of nanorods deposited on the surface, but only increases the thickness. Concentration polarization and subsequent limiting flux phenomena are used in the present invention to achieve aligned deposition of nanorods on the surface and to adjust the thickness of the deposit layer as desired. The degree of alignment of the nanorods in the deposit and the distance therebetween are also used to adjust the porosity and pore size in the film.

The pressure difference that needs to be created between the two sides of the porous surface to reach the limiting flux and realize deposition on the surface depends on the concentration of nanorods and the permeability of the porous surface. When the applied pressure difference is gradually increased with all other operating conditions being the same, the rate of transmission to the non-deposit side of the porous surface stabilizes after a certain pressure difference. At any pressure above the point where stabilization is seen, nanorods can be deposited on the surface.

The second step of the invention consists of coagulating the aligned nanorods deposited on the surface in such a way that they are not re-dispersed into the suspension, thus fixing the alignment on the surface (b). Fixation can be done by increasing the ionic strength of the solution or by adjusting properties such as temperature, pH, solvent, pressure, etc. in a way that decreases the colloidal stability of the nanorods. Furthermore, in case there are reactive groups on the surface of the nanorods, nanorods can be fixed by cross-linking these groups in such a way that their aligned deposition is not disrupted. The cross-linking of the functional groups on the surface of nanorods is carried out by forming covalent bonds directly between these functional groups or by a cross-linking agent to be added later, an initiator, temperature, pressure or light.

When these aligned films are prepared on a porous support surface, deposition is realized in such a way that the gaps between the nanorods are estimated to be around 3-5 nm according to calculations made from experimental observations; films with pores of these sizes can function as membranes or adsorbents and can be used in processes for concentrating structures (polymers, proteins, drug molecules, nanoparticles, etc.) with sizes larger than the gaps in the structure in liquid media or for adsorbing smaller structures to the surface. Once these deposits are fixed on the porous support surface (by coagulation, cross-linking, etc.), they can be separated from the surfaces and used alone. Separation from the support surface can be achieved by dissolving the material forming the support surface in a suitable solvent. This solvent must be a solvent that does not dissolve the nanorods. Surfaces with depositions interact with light at visible wavelengths due to their controlled nematic and cholesteric alignment symmetries. Therefore, they can be used in optical applications, structural-colored surface coatings, light filters, three-dimensional barcode and label applications. Furthermore, they can also be used as a template for the synthesis of inorganic materials. In addition to these applications, anisotropic mechanical characteristics are also provided due to the anisotropic nanostructures of the materials. Due to these features, they can also be used in new robotics applications.

An advantage of the methods claimed in the invention is that they are scalable. Films having deposition on porous support with the controlled cross flow and pressure difference can be prepared on flat and tubular surfaces in square meter scales. This advantage is an important step towards the commercialization of the above-mentioned applications.

Deposition on the porous surface can also be carried out without tangential flow, simply by creating a pressure difference between the two sides of the porous surface. Under these conditions, all nanorods in suspension are deposited without alignment on the porous support surface. Films to be formed in this way from nanorod structured materials such as cellulose nanocrystals, etc., the suspensions of which above a certain concentration are in the cholesteric liquid crystalline phase, are the second variation of the method of the present invention. The flow rate and concentration profile of nanorods flowing towards the porous support surface due to the pressure difference can be controlled by the permeability of the porous surface, the applied pressure and the concentration and ionic strength of the suspension fed into the system. Fixation of the deposit on the surface can again be achieved by ionic strength, temperature, pH, solvent change or cross-linking chemically, thermally or photochemically (e.g. with UV light).

## Claims

1. A method for obtaining a membrane or a functional film, **characterized in that** it comprises the process steps of;

   a) Obtaining aligned nanorod layers by filtering the nanorod structured material suspensions on a porous surface by increasing pressure difference between the two sides of the porous support surface until reaching limiting flux and under a cross (tangential) flow,
   b) Stabilizing the aligned nanorod layers by disrupting their colloidal stability via change in ionic strength, pH, temperature, pressure or solvent exchange or by cross-linking in case the nanorods have functional groups on their surfaces and thereby obtaining stable films.

2. The method according to claim 1, **characterized in that** after process step b, the support beneath the deposit turned into a stable film is dissolved in a solvent that is capable of dissolving porous support material for obtaining the film in a free-standing manner.

3. The method according to claim 1, **characterized in that** said nanorod structured material is selected between natural rod-shaped materials.

4. The method according to claim 1, **characterized in that** the pressure difference is gradually increased under constant flow conditions.

5. The method according to claim 1, **characterized in that** said nanorod structured material is cellulose nanocrystal, metal hydroxide nanorod or nanotube.

6. The method according to claim 1, **characterized in that** the pore size of the porous support surface is such that it does not allow the nanorods to penetrate therein.

7. The method according to claim 1, **characterized in that** the cross-linking of the functional groups on the surface of nanorods is carried out by forming covalent bonds directly between these functional groups or by a cross-linking agent to be added later, an initiator, temperature, pressure or light.

8. The method according to claim 1, **characterized in that** the porous surface is flat, patterned, hollow fiber or tubular surfaces.

**Patentansprüche**

1. Ein Verfahren zum Erhalten einer Membran oder eines Funktionsfilms, **dadurch gekennzeichnet, dass** es die folgenden Verfahrensschritte umfasst;

a) Erhalten ausgerichteter Nanostäbchenschichten durch Filtern von nanostäbchenstrukturierten Materialsuspensionen auf der porösen Oberfläche durch Erhöhen der Druckdifferenz zwischen den beiden Seiten der porösen Trägeroberfläche bis zum Erreichen des Grenzflusses und unter einer Querströmung (tangential),
b) Stabilisierung der ausgerichteten Nanostäbchenschichten durch Störung ihrer kollodialen Stabilität durch Änderung der Ionenstärke, des pH-Werts, der Temperatur, des Drucks oder des Lösungsmittelaustauschs oder durch Vernetzung, falls die Nanostäbchen funktionelle Gruppen auf ihren Oberflächen aufweisen, und wodurch stabile Filme erhalten werden.

2. Verfahren nach Anspruch 1, **dadurch gekennzeichnet, dass** nach Verfahrensschritt b der zu einem stabilen Film geformte Träger unter dem Niederschlag in einem Lösungsmittel gelöst wird, das in der Lage ist, poröses Trägermaterial aufzulösen, wodurch der Film freistehend erhalten wird.

3. Verfahren nach Anspruch 1, **dadurch gekennzeichnet, dass** das genannte nanostäbchenstrukturierte Material aus natürlichen, stäbchenförmigen Materialien ausgewählt wird.

4. Verfahren nach Anspruch 1, **dadurch gekennzeichnet, dass** die Druckdifferenz unter konstanten Strömungsbedingungen allmählich erhöht wird.

5. Verfahren nach Anspruch 1, **dadurch gekennzeichnet, dass** das genannte nanostäbchenstrukturiertes Material Cellulose-Nanokristalle, Metallhydroxid-Nanostäbchen oder Nanoröhrchen ist.

6. Verfahren nach Anspruch 1, **dadurch gekennzeichnet, dass** die Porengröße der porösen Trägeroberfläche so ist, dass sie es den Nanostäbchen nicht ermöglicht, darin einzudringen.

7. Verfahren nach Anspruch 1, **dadurch gekennzeichnet, dass** die Vernetzung der funktionellen Gruppen auf der Oberfläche von Nanostäbchen durch Bildung kovalenter Bindungen direkt zwischen diesen funktionellen Gruppen oder durch ein später zuzusetzendes Vernetzungsmittel, einen Initiator, Temperatur, Druck oder Licht erfolgt.

8. Verfahren nach Anspruch 1, **dadurch gekennzeichnet, dass** es sich bei der porösen Oberfläche um ebene, gemusterte, hohle Faser- oder rohrförmige Oberflächen handelt.

**Revendications**

1. Procédé pour obtenir une membrane ou un film fonctionnel, **caractérisé en ce qu'**il comprend les étapes de processus suivantes :

a) Obtenir des couches de nanotige alignées en filtrant les suspensions de matériaux structurés en nanotige sur une surface poreuse en augmentant la différence de pression entre les deux côtés de la surface de support poreuse jusqu'à atteindre le flux limite et sous un écoulement transversal (tangentiel),
b) Stabiliser les couches de nanotige alignées en perturbant leur stabilité colloïdale par un changement de la force ionique, du pH, de la température, de la pression ou du solvant, ou en les réticulant si les nanotige ont des groupes fonctionnels à leur surface, et obtenir ainsi des films stables.

2. Procédé selon la revendication 1, **caractérisé en ce qu'**après l'étape b du processus, le support sous le dépôt transformé en un film stable est dissous dans un solvant capable de dissoudre le matériau de support poreux pour obtenir le film de manière autonome.

3. Procédé selon la revendication 1, **caractérisé en ce que** ledit matériau structuré en nanotige est sélectionné parmi des matériaux naturels en forme de tige.

4. Procédé selon la revendication 1, **caractérisé en ce que** la différence de pression est progressivement augmentée dans des conditions d'écoulement constant.

5. Procédé selon la revendication 1, **caractérisé en ce que** ledit matériau structuré en nanotige est un nanocristal de cellulose, une nanotige d'hydroxyde métallique ou un nanotube.

6. Procédé selon la revendication 1, **caractérisé en ce que** la taille des pores de la surface du support poreux est telle qu'elle ne permet pas aux nanotige d'y pénétrer.

7. Procédé selon la revendication 1, **caractérisé en ce que** la réticulation des groupes fonctionnels à la surface des nanotige est réalisée en formant des liaisons covalentes directement entre ces groupes fonctionnels ou par un agent de réticulation ajouté ultérieurement, un initiateur, la température, la pression ou la lumière.

8.  Procédé selon la revendication 1, **caractérisé en ce que** la surface poreuse est plate, à motifs, en fibres creuses ou à surfaces tubulaires.

**FIGURE 1**

**FIGURE 2**

FIGURE 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 102703092 A
- US 20190136033 A1
- US 20120312687 A1
- CN 106519308
- CA 2898513 A1
- WO 2014071528 A1
- US 2018043312 A1

**Non-patent literature cited in the description**

- **YÜCEL et al.** *Journal of Membrane Science*, 2018, vol. 559, 54-62
- **DURMAZ et al.** *Journal of Membrane Science*, 2018, vol. 178, 93-103
- **GUILLEN et al.** *Industrial and Engineering Chemistry Research*, 2011, vol. 50 (7), 3798-3817
- **YU et al.** *Angewandte Chemie*, 2014, vol. 53 (38), 10072-10076
- **QIAO et al.** *Food Hydrocolloids*, 2016, vol. 55, 19-25
- **NATARAJ et al.** *Journal of Membrane Science*, 2008, vol. 308 (1-2), 152-161
- **KONCA et al.** *Journal of Membrane Science*, 2019, vol. 587, 9
- **MILLER et al.** *Review of Scientific Instruments*, 2013, vol. 84 (3), 035003
- **GENGAL et al.** *Journal of Membrane Science*, 2015, vol. 476, 224-233